# EUROPEAN PATENT SPECIFICATION

(11) **EP 1 848 150 B1**
(45) Date of publication and mention of the grant of the patent: **17.06.2009**
(21) Application number: 06112789.0
(22) Date of filing: 20.04.2006
(51) Int. Cl.: H04L 12/24, H04L 29/12

(54) **Method and apparatus for hiding network topology**
Verfahren und Vorrichtung zur Datennetzwerktopologieverheimlichung
Procedé et appareil pour la dissimulation de la topologie de réseau de données.

(43) Date of publication of application: 24.10.2007
(73) Proprietor: NTT DoCoMo, Inc., Tokyo (JP)
(72) Inventor: Eyermann, Frank, 85521, Ottobrunn (DE); Racz, Peter, 8002, Zurich (CH); Schaefer, Christian, 85764, Oberschleissheim (DE); Stiller, Burkhard, 8603 Schwerzenbach (CH); Walter, Thomas, 80935, Munich (DE)
(74) Representative: Betten & Resch

(56) References cited:
- EP-A- 1 093 258
- US-A1- 2001 049 730
- US-A1- 2004 125 801
- US-A1- 2005 050 153
- US-B1- 6 477 577
- PATENT ABSTRACTS OF JAPAN vol. 2003, no. 12, 5 December 2003 (2003-12-05) & JP 2006 048240 A (NIPPON TELEGR & TELEPH CORP <NTT>), 16 February 2006 (2006-02-16)
- PATENT ABSTRACTS OF JAPAN vol. 2003, no. 12, 5 December 2003 (2003-12-05) & JP 2005 210352 A (NEC ENGINEERING LTD), 4 August 2005 (2005-08-04)

## Description

### FIELD OF INVENTION

The present invention relates to a method and an apparatus for hiding network topology, especially in mobile and wireless networks.

### BACKGROUND OF THE INVENTION

In current and future mobile and wireless networks it becomes important that administration data is shared between administration servers in different network domains. The term different network domains here refers especially to domains which are operated by different network operators. The problem that arises in such a case is how this data exchange can be performed without revealing the network topology of one network operator towards another network operator, because revealing the topology makes it easier for possible attackers to attack the administration servers in the network.

The problem arises especially in a ubiquitous environment where it is necessary to have a distributed authentication, authorization, accounting and auditing management as users will move from one network to another and they want to receive the same services as in their home network.

This means that administration servers of a first network performing tasks like authentication, authorization, auditing and accounting must exchange data with administration servers of other networks if more than one network is involved in providing the service. Such a data exchange, however, may be monitored and may reveal information about the network and the network topology, such as the addresses of the administration servers, their number, etceteras.

Most operators have a strong interest to keep the knowledge about their network secret. Besides business political reasons there are also practical security reasons. For example, an attacker may use this information to attack special servers in the domain which run software with a known vulnerability or run a Denial of Service (DoS) attack directly against an administration server. Thus the real name and address of an administration server should not be known outside the domain.

It would therefore be desirable due to security considerations, e.g. in order to prevent attacks against servers in a network operator's domain based on the knowledge of the server's IP address, that if administration servers in different domains communicate with each other, e.g. in order to exchange administration data, the network topology of the domain is hidden and not revealed to other domains.

Known techniques for not disclosing a real address of a communication partner are Basic Network Address Translation (Basic NAT) and network address port translation (NAPT). Basic Network Address Translation (Basic NAT) is a method by which IP addresses are mapped from one group to another, transparent to end-users. Network Address Port Translation (NAPT) is a method by which many (originating) network addresses and their TCP/UDP (Transmission Control Protocol/User Datagram Protocol) ports are translated into a single network address but the TCP/UDP ports are kept differently for every originating network address so that a mapping backwards can be done. Together, these two operations, referred to as traditional NAT, provide a mechanism to connect a realm with private addresses to an external realm with globally unique registered addresses.

Bidirectional NAT (Two-Way NAT) as disclosed in P. Srisuresh, A. Holdrege, "IP Network Address Translator (NAT) Terminology and Considerations", RFC 2663, August 1999, enables a session initiation from both public and private network but requires a special implementation of a Domain Name Server (DNS) for this. The DNS server must be capable to translate private realm addresses in DNS Queries and into their external realm address binding in the DNS response.

The solutions described above are intended to increase the address range of a network with private addresses if only a few public addresses are available, however, they are not intended to explicitly hide information about the network topology.

It is therefore an object of the invention to provide a method and an apparatus for hiding network topology, especially in mobile and wireless networks.

### SUMMARY OF THE INVENTION

According to one embodiment there is provided a method for hiding the network topology of a first mobile network forming a first administrative domain and having a plurality of administration servers when data is to be exchanged between an administration server of said first network and a second network forming a second administrative domain, said method comprising:
sending data to an administration server in said second network only through a gateway server which substitutes the real administration server host name by a random administration server host name;
receiving data from an administration server of said second network only through said gateway server, said data being addressed to said random administration server host name which is replaced by said real administration server host name by said gateway server, and
maintaining by said gateway server a mapping table indicating the correspondence between said real administration server host name and said random administration server host name.

With this method it is not possible for the administration server of the second network to know the address of the administration server of the first network. If the method is applied symmetrically, i.e. by both networks each using a gateway server, it is not possible that the two administration servers know each others addresses. The method thereby supports the hiding of a network domain to others outside of said network domain but allows for an exchange of administration data between any of the servers in the different domains.

Additionally, the communication through a gateway server reduces the administrative overhead. Without using a gateway server for the communication with another domain every administration server in a domain would need public and private keys for authentication and encryption which increases costs and maintenance effort due to creating, managing and distributing these keys. Moreover, as the keys have to be valid inter-domain, a trusted-third party would be required to create and validate authentication requests.

Furthermore the proposed method enables an administration server in one domain to address another administration server in another domain without knowing the name of the administration server. Moreover, this functionality does not require the help of a DNS server to resolve the address of the internal server while the corresponding server does not need to know the real host name.

According to one embodiment the same administration server is represented by respectively different random names when data from the administration server is sent to different second administrative domains.

This allows a particularly effective hiding of the real name of the administration server(s) and thereby of the network topology.

According to one embodiment a mapping entry in said mapping table is removed after a timeout, said timeout being at least as long as the maximum lifetime of a session.

According to one embodiment the host name of an administration server is substituted by respectively different random names when the communication belongs to different sessions. This allows to hide the actual number of administration servers in a domain.

According to one embodiment the method further comprises:
if the address of the administration server of said second domain to which data is to be sent is not known, including in said message information about the address of a terminal for which said administration server is responsible; and
when said message reaches said second administrative domain, determining the address of said administration server which has not been known based on said address of said terminal.

According to one embodiment the method further comprises:
maintaining IP address pool information in a domain which indicates which administration server is responsible for which IP addresses;
determining the address of said administration server which has not been known based on said IP address pool information.

According to one embodiment there is provided an apparatus for hiding the network topology of a first mobile network forming a first administrative domain and having a plurality of administration servers when data is to be exchanged between an administration server of said first network and a second network forming a second administrative domain, said apparatus comprising:
a sending unit for sending data to an administration server in said second network such that the real administration server host name is substituted by a random administration server host name;
a receiving unit for receiving data from an administration server of said second network, said data being addressed to said random administration server host name, and for replacing said random administration server host name by said real administration server host name, and
a maintaining unit for maintaining a mapping table indicating the correspondence between said real administration server host name and said random administration server host name.

According to one embodiment the host name of an administration server is substituted by respectively different random names when data from said administration server is sent to different second administrative domains.

According to one embodiment a mapping entry in said mapping table is removed after a timeout, said timeout preferably being at least as long as the maximum lifetime of a session.

According to one embodiment the host name of an administration server is substituted by respectively different random names when the communication belongs to different sessions.

According to one embodiment comprises:
said sending unit, if the address of the administration server of said second domain to which data is to be sent is not known, includes in said message information about the address of a terminal for which said administration server is responsible such that when said message reaches said second administrative domain the address of said administration server which has not been known can be determined based on said address of said terminal.

According to one embodiment the apparatus further comprises:
a maintaining unit for maintaining IP address pool information in a domain which indicates which administration server is responsible for which IP addresses;
a determining unit for determining the address of said administration server which has not been known based on said IP address pool information.

According to one embodiment there is provided a computer program comprising computer executable program code which when being executed by a computer causes said computer to carry out a method according to an embodiment of the invention.

### DESCRIPTION OF THE DRAWINGS

Fig. 1 illustrates a configuration according to an embodiment of the invention.
Fig. 2 illustrates a configuration according to a further embodiment of the invention.
Fig. 3 illustrates a mapping table entry according to an embodiment of the invention.
Fig. 4 illustrates a mapping table entry according to a further embodiment of the invention.
Fig. 5 illustrates a configuration according to a further embodiment of the invention.
Fig. 6 illustrates a communication scheme according to a further embodiment of the invention.
Fig. 7 illustrates a communication scheme according to a further embodiment of the invention.
Fig. 8 illustrates a sequence diagram according to an embodiment of the invention.

### DETAILED DESCRIPTION

An embodiment of the invention will now be described which illustrates a case in which data between administration servers of different operators is to be exchanged. The administration servers may be e.g. servers which are in charge of tasks like authentication, authorization, auditing, accounting and charging, and therefore hereinafter they may sometimes be referred to as A4C servers. However, the administration servers may also fulfill other tasks and the embodiments may apply to any administration servers fulfilling administrative tasks and having the need to connect to an administration server of another domain.

As every administration server should be able to exchange data with every other server in possibly another domain, problems may arise from the network topology being possibly detected from such communications and being used to start an attack. Basically an embodiment of the invention
- enables to hide information about the network topology of an operator, and
- limits the number of servers that are allowed to exchange data inter-domain.

Thereby, the invention reduces the number of possible attack targets (e.g. attacks may run against dedicated servers only which are particularly protected against known attacks).

According to one embodiment there is provided a specific origin host address substitution procedure which allows network operators to exchange administration data but keep their network topology secret. This is achieved by using dedicated gateway servers which perform a host address substitution which substitutes the original source host address in messages by a "dummy" or random host address. Keeping track of the address substitution allows the appropriate message routing in both directions.

An embodiment of the invention assumes that a protocol above TCP is in place that provides realm based or domain based message routing. Address fields or Attribute Value Pairs for information like originating host, destination host and destination domain are supported to allow the addressing and routing of messages. Using these addresses the communication may be performed according to an embodiment of the invention as described in the following.

Since the attribute value pairs AVPs (or address fields) used by the underlying protocol contain information about the network topology like Origin-Host there is provided a mechanism to hide this information. The Origin-Host AVP carries the address (or the name, e.g. the fully Qualified Domain Name FQDN) of the sending server. According to an embodiment a gateway server, through which exchanged messages must pass before they leave or enter a domain, is replacing the host part of the FQDN of the Origin-Host with a name being created randomly when the gateway notices an FQDN sent towards one domain the first time. The randomly created name can, according to one embodiment, be a base64 encoded hash of the original name hostname concatenated with a seed thereby eliminating also conflicts with real host names.

A possible application of the embodiment of the invention is the exchange of accounting and auditing data collected in a network operator's domain by specific accounting and auditing servers and sent to the home operator's domain. The home operator is the operator with which a user has a subscription, if the user is attached not to his home operator he is with a foreign operator. In such an embodiment the administration servers which are to exchange information may have auditing functions and may be termed authentication, authorization, accounting, auditing and charging server (A4C). They may communicate with administration servers in a foreign domain only through a gateway server having the aforementioned address substitution functionality to hide information about the network topology.

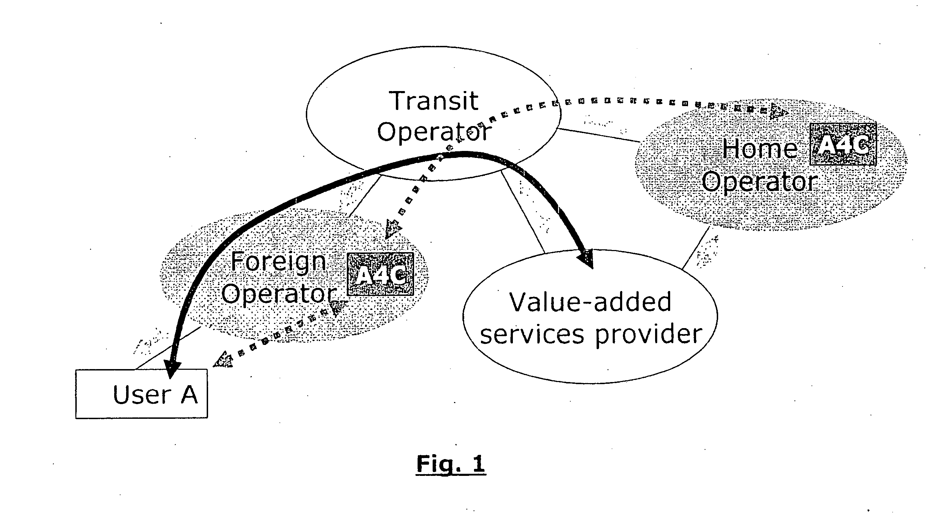

Fig. 1 schematically illustrates an environment in which an embodiment of the present invention may be applied. A user A using his mobile terminal may be a registered user of the network of his home operator shown on the right-hand side of Fig. 1. However, in the situation where user A is not located in the coverage area of his home operator, he may use services only through one or more foreign operators such as the foreign operator shown on the left-hand side and the transit operator which mediates the data exchange between the foreign operator and the home operator. In such a case the user A may use a service provided by the value-added service provider, such as a messaging service, internet access, video streaming, any webserver services, or anything alike, by connecting to the value-added service provider through the foreign operator and the transit operator as shown through the long solid arrow in Fig. 1.

In order to provide an appropriate accounting of the usage of services there must be one or more administration servers provided in each operator domain which fulfill the task of authentication, authorization, accounting, auditing and charging which is illustrated in Fig. 1 as an "A4C"-server. If the accounting or charging of services should be performed beyond the home operator region the A4C servers of different domains must exchange A4C data as shown by the dotted arrow between the A4C servers in Fig. 1.

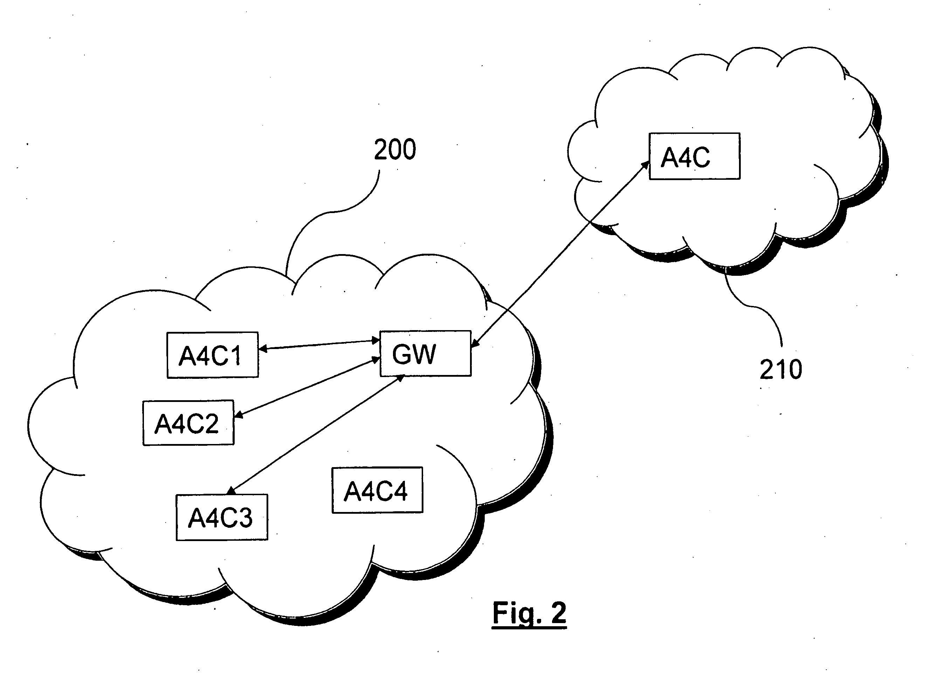

An operator domain may have only one but typically each operator domain has a plurality of A4C servers. Such a configuration is schematically illustrated in Fig. 2.

In order to hide the network topology of a certain domain, e.g. the foreign operator domain, according to an embodiment the connection of an administration server, such as an A4C server of a first domain 200 (the foreign operator), with an administration server of a second domain 210, such as an A4C server of the home operator domain, is not made directly but through a gateway server. The gateway server then replaces the originating address or the originating hostname of an A4C server by a corresponding random address or random hostname when forwarding the data to the A4C server of the foreign domain. This allows to hide the real originating address or hostname of any of the A4C servers from the world outside the own domain e.g. the foreign operator domain, because the plurality of A4C servers A4C1, A4C2, ..., A4Cn do not appear with their own real address or hostname but only with a random address/hostname by which the real address or hostname has been replaced.

Any communication from an administration server to its counterpart in a foreign domain must pass through a gateway server which carries out the address substitution.

According to one embodiment the gateway server maintains a mapping table which contains a mapping between the real name/address of the A4C server and the address by which it is replaced. The messages forwarded by the gateway server to the other domain have as originating address or name the random name/address which has been used to replace the real name/address. Any incoming message directed to a specific A4C server arrives at the gateway server with this random name or address as destination. Using the mapping table the gateway server can appropriately route the incoming messages directed to a specific A4C server by replacing the random name with the real name.

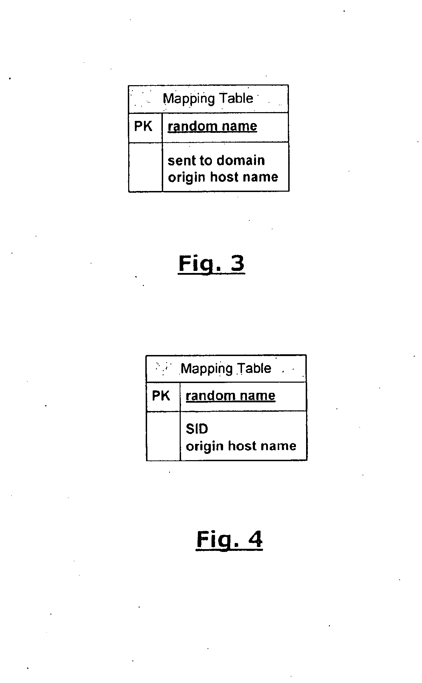

In one embodiment the information about the address replacement is stored in a mapping table which is schematically illustrated in Fig. 3 where the combination of "random name" and "sent to domain" is unique and identifies the "origin host name" (or the Origin-Host AVP). This means that in this embodiment for the same originating host when sending messages to different other domains its host name or address is substituted by different random names. This makes it particularly difficult to identify the originating host or to reveal information about the network topology. It increases the variety of random addresses being used to substitute the real address of the originating host, and thereby it makes it more difficult to reveal information about the network topology.

For incoming data the gateway server has to do the replacement reversely. In one embodiment the gateway server is using always the combination of a "random name" and "sent to domain" (the name of the destination domain) for identifying the Origin-Host name (or the Origin-Host AVP) because the mapping of these values does not change. If necessary (e.g., for scalability reasons) the A4C server can remove this mapping after a timeout, which according to one embodiment is longer than the maximum lifetime of a session.

Since the gateway is not required to maintain state of sessions and the same mapping is used for all active sessions, the gateway server does not know which session is running. Thus after an initial exchange individual A4C servers can be addressed without revealing the actual information about the network topology and the gateway does not have to change the mapping for every new session.

The embodiment described before allows to hide the real name of a server in a domain and still works if no maximum session duration is given, but it may be possible to deduce the amount of available servers in a domain. A further embodiment described hereinafter allows also hiding the actual number of A4C servers in use. To achieve this goal the session identifier (SID) is used instead of "sent to domain", as can be seen from Fig. 4. This means that a unique pair of (real) originating host address and session identifier is assigned a corresponding random name in the mapping table. The SID used is either the root SID or some other SID that was received by the foreign domain to do accounting/auditing in its domain and is used for exchanging data between the domains. Due to the use of the SID one A4C has as many names to other domains as sessions. Thus it is not possible anymore from the outside to deduce the actual number of servers.

In one embodiment the underlying protocol may be Diameter as described in Calhoun, P.; Loughney, J.; Guttman, E.; Zorn, G. and Arkko, J.,"RFC 3855 - Diameter Base Protocol", 2003.
As in this case at the initial message (AA-Request in Diameter) the SID is not available the "End-to-End Identifier" AVP of the Diameter protocol may be used and replaced with real SID when the answer (AA-Answer) is arriving.

According to one embodiment, the implementation using the session identifier in the mapping table is preferably used if a maximum session duration is given due to scalability reasons and references can be removed from the mapping table after some time. Otherwise the mapping table may get too big to be handled by the gateways.

The embodiments described hereinbefore propose the hiding of A4C servers inside an operator's network behind gateways. Consequently an addressing of servers in other domains by name is only possible if the gateway stores an appropriate entry in its mapping table in order to map the random name back to the real name of the server.
For the very first message sent to a server in another domain either the entry for the server is not yet present in the mapping table of the gateway or the random name of the server is not known to a potential sender. To solve these problems two options may be used:
o The message is addressed to a domain: This may be used if the message is not dedicated to one special server. Any server in the domain can be the recipient and can perform the requested action. If one server is chosen it is only important that subsequent messages are sent to the same server.
   One example is an AA (Authentication and Authorization)-Request sent from a foreign operator FO to the home operator HO when a user attaches for the first time to a network of the FO. The AA-Request is sent to the gateway of the HO and the gateway forwards it to an A4C server in its domain, whereas it is of no particular importance which server is chosen, so that it may be e.g. chosen based on any arbitrary selection scheme (e.g. random) or based on criteria such as load. The request is fulfilled and an answer is send back thus the server is known in FO's domain.
o The message can designate a targeted server address using client IP address-based message routing: In all other cases, where a distinct server has to be addressed, the sender can use *client IP address-based message routing* (a more detailed description can be found below). This mechanism is not influenced by the gateways, as it reveals no internal details about the network.

In both cases the initial message can have appropriate addresses (e. g. by addressing only the domain in the first case and using client IP address-based message routing in the second case) and be delivered to the receiver. The message exchange then generates all necessary entries in the mapping tables of the gateways and the answer to the request provides the sender with the name of the peer server. Therefore all subsequent messages can use addressing by name.

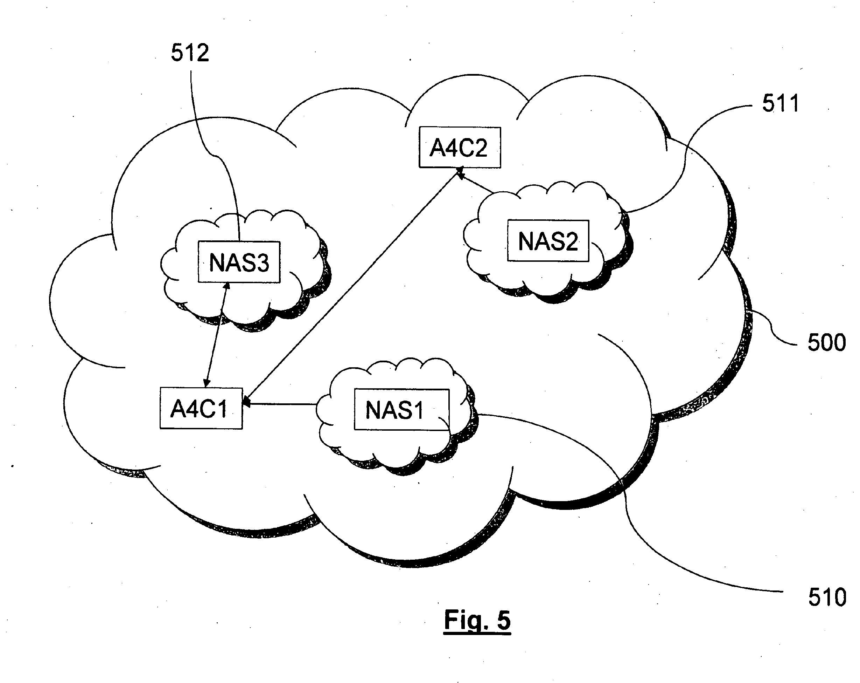

The mechanism referred to as client IP address-based message routing according to an embodiment of the invention will now be explained in somewhat more detail in connection with Fig 5.

In an operator domain 500 each of a plurality of network access points or network access servers (here NAS1 and NAS2) can dynamically assign a certain range of IP addresses 510, 511, 512. The IP pool of a NAS is a list of all IP addresses a NAS can dynamically assign to mobile terminals attached to it.
Each network access server is served by a corresponding A4C server, as indicated in Fig. 5 by A4C1 serving NAS1 and NAS3 and A4C2 serving NAS 2. An A4C server may serve multiple NASs, however, to each NAS belongs only one A4C server which is the managing server for such tasks like authorization, authentication, auditing and accounting for the terminals connected to the NAS. E.g. if a terminal connects to NAS2 it will be assigned an IP address by its responsible managing A4C server A4C2 or by the NAS2, and A4C2 will manage the data for the services used by this terminal.

A4C servers in this embodiment obtain or aggregate the IP pool information from the NASs (Network Access Server) and announce it to their A4C peers in the same domain. Thereby each A4C server gets knowledge about which IP addresses in the domain are served by which A4C server. In case of Fig. 5 this means that A4C1 is aware of the IP addresses for which A4C2 is responsible and vice versa. In consequence, an intra-domain overlay routing infrastructure evolves where every A4C server knows where to route administration messages which should reach a certain A4C server if it knows the client IP address to which the administration message relates (e.g. "accounting information for IP ....."). In the case where an administration message or an A4C message should be directed to an A4C server of a foreign domain, if the foreign domain is known, messages can be transferred to any A4C server of the other domain (and in particular to the gateway server) for which the message is intra-domain. If the message contains an indication of the IP address of the terminal for which the targeted A4C server is the responsible administrative server, any server in the foreign domain then forwards the message to the A4C server that is responsible for the IP pool in which the mobile terminal's IP address is included.

In this manner a peer can address an A4C server without knowing its address by indicating the mobile terminal's IP address for which the A4C server is responsible, i. e. the IP address of the communication partner. When transmitting a message from an A4C server of a first domain to an A4C server of a foreign domain this information has to be included. Based on this information any A4C server and the gateway server are able to identify the A4C server in charge of this IP address and to route the message to the correct A4C server.

Based on such a mechanism, the initial exchanges where the address of the A4C server on the other domain is not yet known are established either by client IP address-based message routing, or by messages not addressed to a named A4C server but only to an A4C domain. With client IP address-based message routing it is sufficient to insert the IP address of the mobile device in the message sent and every A4C server in the other domain knows to which A4C server the message needs to be forwarded. If only the domain of the other A4C server is addressed then the gateway in the domain decides to which A4C server the message will be forwarded.

For the first message leaving the domain the gateway can not find an entry for "sent to domain" and "origin host name" in the mapping table. In this case the random name is created (as described above) and an entry is made in the mapping table.

According to one embodiment the information about which A4C server is responsible for which IP addresses is not maintained in all A4C servers but only in the gateway. This is sufficient if the messages for which client IP address-based message routing should be carried out in any case have to pass through the gateway. In such a case it is sufficient if the gateway is able to perform a lookup and route the message to the right A4C server.

While the aforementioned embodiment is easier to administrate since only the gateway needs to be informed, the embodiment where each A4C server is aware of the IP address pool of all its peers is more flexible because any A4C server in this case may perform the routing based on the client IP address.

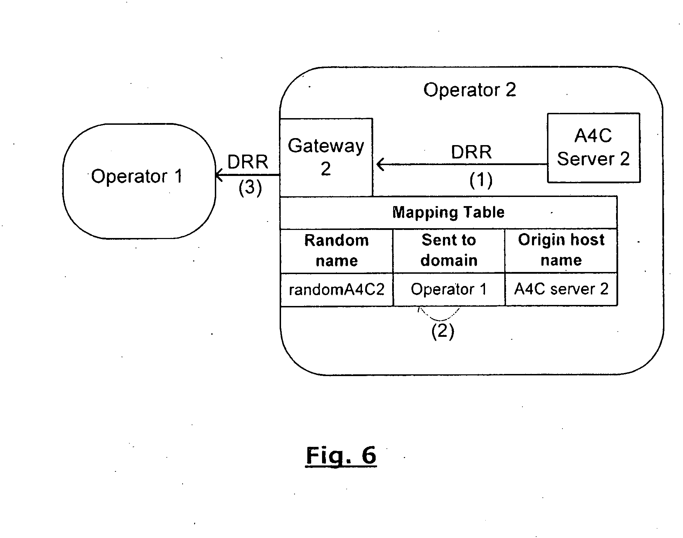

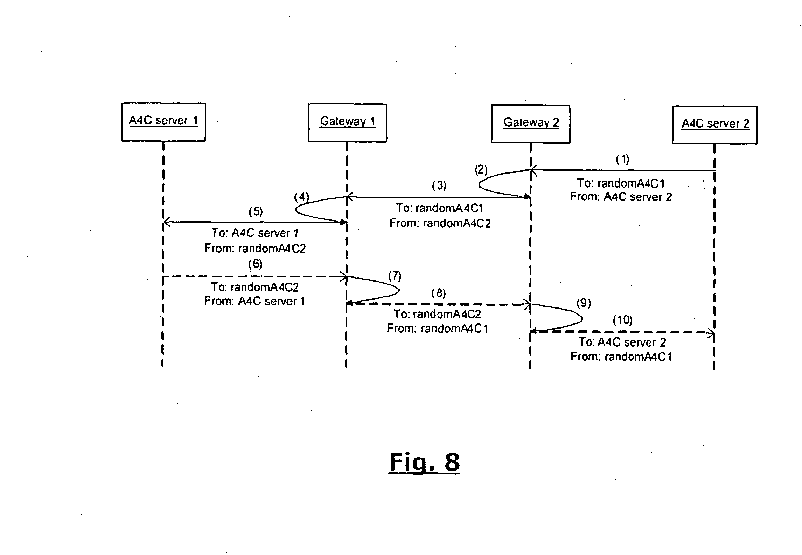

In the following now there will be described an embodiment in somewhat more detail in connection with Fig. 6. A configuration according to this embodiment is schematically shown in Fig.6 where a Data-Report-Request (DRR) is shown which is used to send operational (e.g. accounting) data to other A4C servers. Operator 2 sends a Data-Report-Request (1), originating from A4C Server 2, to Operator 1. The request has to be forwarded by Gateway 2. It is assumed that the mapping tables at Gateway 2 and Gateway 1 already exist because of a message which was sent before. At the Gateway 2, a mapping table lookup (2) is performed, which is also shown in the message sequence chart (MSC) Fig. 8, and the Origin-Host address (or AVP) is changed from "A4C Server 2" (see entry in column "Origin host name") to "randomA4C2" (see entry in column "Random name"). However, if the entry had not existed yet a new entry would have been created with a randomly created name (to be put into column "Random Name").

The Gateway 2 subsequently sends the request (3) to Operator 1. The random name for A4C server 1, taken from a previous message exchange, is included in the Destination-Host address (or AVP) of the request.

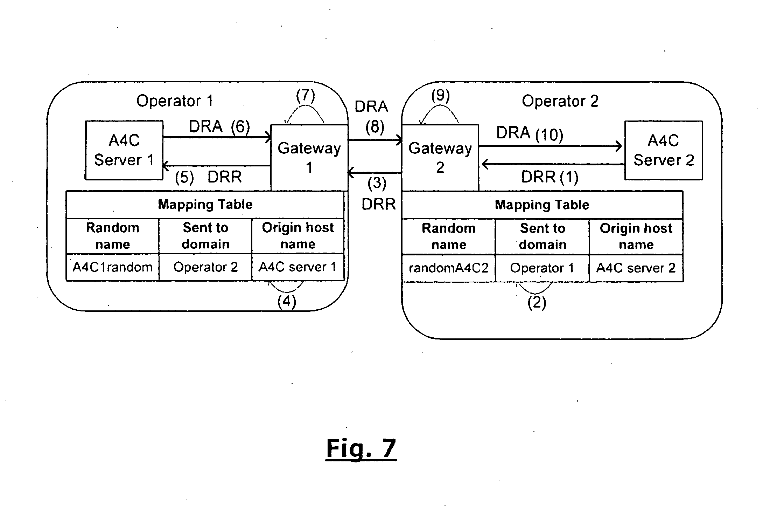

Fig. 7 shows the complete Data-Report-Request and Data-Report-Answer (DRA) exchange including the first steps shown in Fig. 6. The Gateway 1 of Operator 1 looks up the real name of A4C server 1 (4) in its mapping table and forwards (5) the DRR to A4C Server 1 as shown in Fig. 7. A4C Server 1 replies with a Data-Report-Answer (6) using "randomA4C2" in the Destination-Host address (or AVP). Gateway 1 replaces the Origin-Host address (or AVP) of the answer with "A4C1 random" (7) and sends (8) it to Gateway 2. Gateway 2 checks (9) if the Destination-Host address (or AVP) is set and maps back "randomA4C2" to "A4C Server 2". If Gateway 2 can not find a mapping in its table for "randomA4C2" the message in one embodiment is rejected. The Data-Report-Answer is then send (10) to the A4C Server 2.

According to one embodiment the basic underlying protocol for the topology hiding mechanism is Diameter. Diameter is an AAA (Authentication, Authorization Accounting) protocol for applications such as network access or IP mobility. The basic concept is to provide a base protocol that can be extended in order to provide AAA services to new access technologies. Diameter is intended to work in both local and roaming AAA situations. More details can be found in RFC 3855.

However, to implement the present invention it is not necessary to use the Diameter protocol. Any other protocol can be used that supports realm based or domain based routing. Moreover, the protocol should support header fields such as Origin-Host Address (Origin Host Address AVP), Destination-Host (Destination Host AVP). For applying client IP address-based message routing it is preferable if the protocol further supports a header field for NAS IP-pool AVP. Client IP address-based message routing as described before according to an embodiment is supported.

It will be readily apparent to the skilled person that the methods according to the embodiments described hereinbefore may be implemented in network independent of the actual standard being used. Moreover, a skilled person will readily recognize that the elements, units and apparatuses described in connection with embodiments of the invention may be implemented in hardware, in software, or as a combination of both. In particular it will be appreciated that the embodiments of the invention and the elements of modules described in connection therewith may be implemented by a computer program or computer programs running on a computer or being executed by a microprocessor.

## Claims

1. A method for hiding the network topology of a first mobile network forming a first administrative domain and having a plurality of administration servers when data is to be exchanged between an administration server of said first network and a second network forming a second administrative domain, said method comprising:
sending data to an administration server (A4C) in said second network (210) through a gateway server (GW) which substitutes the real administration server host name by a random administration server host name;
receiving data from an administration server (A4C) of said second network (210) through said gateway server (GW), said data being addressed to said random administration server host name which is replaced by said real administration server host name by said gateway server (GW), and
maintaining by said gateway server (GW) a mapping table indicating the correspondence between said real administration server host name and said random administration server host name.

2. The method of claim 1, wherein the host name of the real administration server is substituted by respectively different random names when data from said administration server is sent to a different second administrative domain.

3. The method of claim 1 or 2, wherein a mapping entry in said mapping table is removed after a timeout, said timeout preferably being at least as long as the maximum lifetime of a session.

4. The method of one of claims 1 to 3, wherein the host name of the real administration server is substituted by respectively different random names when the exchanged data belongs to different sessions.

5. The method of one of claims 1 to 4, further comprising:
if the address of the administration server of said second domain to which data is to be sent is not known, including in said message information about the address of a terminal for which said administration server is responsible; and
when said message reaches said second administrative domain, determining the address of said administration server which has not been known based on said address of said terminal.

6. The method of claim 5, further comprising:
maintaining IP address pool information in a domain which indicates which administration server is responsible for which IP address;
determining the address of said administration server which has not been known based on said IP address pool information.

7. An apparatus (GW) for hiding the network topology of a first mobile network (200) forming a first administrative domain and having a plurality of administration servers (A4C1,A4C2,A4C3,A4C4) when data is to be exchanged between an administration server (A4C1) of said first network (200) and a second network (210) forming a second administrative domain, said apparatus comprising:
a sending unit for sending data to an administration server (A4C) in said second network such that the real administration server host name is substituted by a random administration server host name;
a receiving unit for receiving data from an administration server (A4C) of said second network (210), said data being addressed to said random administration server host name, and for replacing said random administration server host name by said real administration server host name, and
a maintaining unit for maintaining a mapping table indicating the correspondence between said real administration server host name and said random administration server host name.

8. The apparatus of claim 7, wherein the host name of the real administration server is substituted by respectively different random names when data from said administration server is sent to different second administrative domains.

9. The apparatus of claims 7 or 8, wherein a mapping entry in said mapping table is removed after a timeout, said timeout preferably being at least as long as the maximum lifetime of a session.

10. The apparatus of one of claims 7 to 9, wherein the host name of the real administration server is substituted by respectively different random names when the exchanged data belongs to different sessions.

11. The apparatus of one of claims 7 to 10, wherein:
said sending unit, if the address of the administration server of said second domain to which data is to be sent is not known, includes in said message information about the address of a terminal for which said administration server is responsible such that when said message reaches said second administrative domain the address of said administration server which has not been known can be determined based on said address of said terminal.

12. The apparatus of claim 11, further comprising:
a maintaining unit for maintaining IP address pool information in a domain which indicates which administration server is responsible for which IP address;
a determining unit for determining the address of said administration server which has not been known based on said IP address pool information.

13. A computer program comprising computer executable program code which when being executed by a computer causes said computer to carry out all the steps of a method according to one of claims 1 to 6.

## Patentansprüche

1. Verfahren zum Verstecken der Netzwerktopologie eines ersten mobilen Netzwerks, das eine erste administrative Domain bildet und eine Mehrzahl von Administrationsservern aufweist, wenn Daten zwischen einem Administrationsserver des ersten Netzwerks und einem zweiten Netzwerk ausgetauscht werden sollen, das eine zweite administrative Domain bildet, wobei das Verfahren aufweist:
Senden von Daten an einen Administrationsserver (A4C) in dem zweiten Netzwerk (210) durch einen Gateway-Server (GW), der den realen Administrationsserver-Hostnamen durch einen zufälligen Administrationsserver-Hostnamen ersetzt;
Empfangen von Daten von einem Administrationsserver (A4C) des zweiten Netzwerks (210) durch den Gatewayserver (GW), wobei die Daten an den zufälligen Administrationsserver-Hostnamen adressiert werden, der vom Gatewayserver (GW) durch den realen Administrationsserver-Hostnamen ersetzt wird, und
Aufrechterhalten einer Mapping-Tabelle durch den Gatewayserver (GW), die eine Korrespondenz zwischen dem realen Administrationsserver-Hostnamen und dem zufälligen Administrationsserver-Hostnamen angibt.

2. Verfahren nach Anspruch 1, wobei der Hostname des realen Administrationsservers durch jeweils unterschiedliche zufällige Namen ersetzt wird, wenn Daten von dem Administrationsserver zu einer unterschiedlichen zweiten administrativen Domain gesandt werden.

3. Verfahren nach Anspruch 1 oder 2, wobei ein Mapping-Eintrag in der Mapping-Tabelle nach einem Timeout entfernt wird, wobei der Timeout vorzugsweise zumindest so lange dauert wie die maximale Lebenszeit einer Session.

4. Verfahren nach einem der Ansprüche 1 bis 3, wobei der Hostname des realen Administrationsservers ersetzt wird durch jeweils unterschiedliche zufällige Namen, wenn die ausgetauschten Daten zu unterschiedlichen Sessions gehören.

5. Verfahren nach einem der Ansprüche 1 bis 4, ferner aufweisend:
falls die Adresse des Administrationsservers der zweiten Domain, zu der die Daten gesandt werden, nicht bekannt ist, dann Einschließen von Informationen über die Adresse eines Terminals, für das der Administrationsserver verantwortlich ist, in der Nachricht; und
wenn die Nachricht die zweite administrative Domain erreicht, Ermitteln der Adresse des Administrationsservers, der nicht bekannt war, basierend auf der Adresse des Terminals.

6. Verfahren nach Anspruch 5, ferner aufweisend:
Aufrechterhalten von IP-Adreßpool-Informationen in einer Domain, welche angeben, welcher Administrationsserver für welche IP-Adresse verantwortlich ist;
Ermitteln der Adresse des Administrationsservers, der nicht bekannt war, basierend auf den IP-Adreßpool-Informationnen.

7. Vorrichtung (GW) zum Verstecken der Netzwerktopologie eines ersten mobilen Netzwerks (300), das eine erste administrative Domain bildet und eine Mehrzahl von Administrationsservern (A4C1, A4C2, A4C3, A4C4) aufweist, wenn Daten zwischen einem Administrationsserver (A4C1) des ersten Netzwerks (200) und einem zweiten Netzwerk (210), das eine zweite administrative Domain bildet, ausgetauscht werden sollen, wobei die Vorrichtung aufweist:
eine Sendeeinheit zum Senden von Daten an einen Administrationsserver (A4C) in dem zweiten Netzwerk auf solche Weise, dass der reale Administrationsserver-Hostname ersetzt wird durch einen zufälligen Administrationsserver-Hostnamen;
eine Empfangseinheit zum Empfangen von Daten von einem Administrationsserver (A4C) des zweiten Netzwerks (210), wobei die Daten an den zufälligen Administrationsserver-Hostnamen adressiert sind, sowie zum Ersetzen des zufälligen Administrationsserver-Hostnamens durch den realen Administrationsserver-Hostnamen, und
eine Aufrechterhaltungseinheit zum Aufrechterhalten einer Mapping-Tabelle, welche die Korrespondenz zwischen dem realen Administrationsserver-Hostnamen und dem zufälligen Administrationsserver-Hostnamen angibt.

8. Vorrichtung nach Anspruch 7, wobei der Hostname des realen Administrationsservers ersetzt wird durch jeweils unterschiedliche Namen, wenn Daten von dem Administrationsserver an unterschiedliche zweite administrative Domains gesendet werden.

9. Vorrichtung nach Anspruch 7 oder 8, wobei ein Mapping-Eintrag in der Mapping-Tabelle nach einem Timeout entfernt wird, wobei der Timeout vorzugsweise zumindest so lange ist wie die maximale Lebenszeit einer Session.

10. Vorrichtung nach einem der Ansprüche 7 bis 9, wobei der Hostname des realen Administrationsservers ersetzt wird durch jeweils unterschiedliche zufällige Namen, wenn die ausgetauschten Daten zu unterschiedlichen Sessions gehören.

11. Vorrichtung nach einem der Ansprüche 7 bis 10, wobei die Sendeeinheit dann, wenn die Adresse des Administrationsservers der zweiten Domain, an die Daten gesendet werden sollen, nicht bekannt ist, in der Nachricht Informationen über die Adresse eines Terminals einschließt, für das der Administrationsserver verantwortlich ist, so dass wenn die Nachricht die zweite administrative Domain erreicht, die Adresse des Administrationsservers, die nicht bekannt war, basierend auf der Adresse des Terminals ermittelt werden kann.

12. Vorrichtung nach Anspruch 11, ferner aufweisend:
eine Aufrechterhaltungseinheit zum Aufrechterhalten von IP-Adreßpool-Informationen in einer Domain, welche angeben, welcher Administrationsserver verantwortlich für welche IP-Adresse ist;
eine Ermittlungseinheit zum Ermitteln der Adresse des Administrationsservers, der nicht bekannt war, basierend auf der IP-Adreßpool-Information.

13. Computerprogramm aufweisend computerausführbaren Programmcode, der, wenn er ausgeführt wird, den Computer veranlaßt, alle Schritte eines Verfahrens gemäß einem der Ansprüche 1 bis 6 auszuführen.

## Revendications

1. Procédé destiné à cacher la topologie de réseau d'un premier réseau mobile formant un premier domaine administratif et ayant une pluralité de serveurs d'administration lorsque des données doivent être échangées entre un serveur d'administration dudit premier réseau et un second réseau formant un second domaine administratif, ledit procédé comprenant les étapes consistant à :
envoyer des données à un serveur d'administration (A4C) dans ledit second réseau (210) par l'intermédiaire d'un serveur de passerelle (GW) qui substitue le nom d'hôte de serveur d'administration réel par un nom d'hôte de serveur d'administration aléatoire ;
recevoir des données d'un serveur d'administration (A4C) dudit second réseau (210) par l'intermédiaire dudit serveur de passerelle (GW), lesdites données étant adressées audit nom d'hôte de serveur d'administration aléatoire qui est remplacé par ledit nom d'hôte de serveur d'administration réel par ledit serveur de passerelle (GW), et
maintenir par ledit serveur de passerelle (GW) une table de correspondances indiquant la correspondance entre ledit nom d'hôte de serveur d'administration réel et ledit nom d'hôte de serveur d'administration aléatoire.

2. Procédé selon la revendication 1, dans lequel le nom d'hôte du serveur d'administration réel est substitué par des noms aléatoires respectivement différents lorsque des données provenant dudit serveur d'administration sont envoyées à un second domaine administratif différent.

3. Procédé selon la revendication 1 ou 2, dans lequel une entrée de correspondance dans ladite table de correspondances est retirée après une temporisation, ladite temporisation étant de préférence au moins aussi longue que la durée de vie maximum d'une session.

4. Procédé selon l'une des revendications 1 à 3, dans lequel le nom d'hôte du serveur d'administration réel est substitué par des noms aléatoires respectivement différents lorsque les données échangées appartiennent à des sessions différentes.

5. Procédé selon l'une des revendications 1 à 4, comprenant en outre les étapes consistant à :
si l'adresse du serveur d'administration dudit second domaine auquel les données doivent être envoyées n'est pas connue, inclure dans ledit message des informations concernant l'adresse d'un terminal dont ledit serveur d'administration est responsable ; et
lorsque ledit message atteint ledit second domaine administratif, déterminer l'adresse dudit serveur d'administration qui n'a pas été connue d'après ladite adresse dudit terminal.

6. Procédé selon la revendication 5, comprenant en outre les étapes consistant à :
maintenir des informations de groupe d'adresses IP dans un domaine qui indique quel serveur d'administration est responsable de quelle adresse IP ;
déterminer l'adresse dudit serveur d'administration qui n'a pas été connue d'après lesdites informations de groupe d'adresses IP.

7. Appareil (GW) destiné à cacher la topologie de réseau d'un premier réseau mobile (200) formant un premier domaine administratif et ayant une pluralité de serveurs d'administration (A4C1, A4C2, A4C3, A4C4) lorsque des données doivent être échangées entre un serveur d'administration (A4C1) dudit premier réseau (200) et un second réseau (210) formant un second domaine administratif, ledit appareil comprenant :
une unité d'envoi pour envoyer des données à un serveur d'administration (A4C) dans ledit second réseau de sorte que le nom d'hôte de serveur d'administration réel est substitué par un nom d'hôte de serveur d'administration aléatoire ;
une unité de réception pour recevoir des données d'un serveur d'administration (A4C) dudit second réseau (210), lesdites données étant adressées audit nom d'hôte de serveur d'administration aléatoire, et pour remplacer ledit nom d'hôte de serveur d'administration aléatoire par ledit nom d'hôte de serveur d'administration réel, et
une unité de maintien pour maintenir une table de correspondances indiquant la correspondance entre ledit nom d'hôte de serveur d'administration réel et ledit nom d'hôte de serveur d'administration aléatoire.

8. Appareil selon la revendication 7, dans lequel le nom d'hôte du serveur d'administration réel est substitué par des noms aléatoires respectivement différents lorsque des données dudit serveur d'administration sont envoyées à différents seconds domaines administratifs.

9. Appareil selon la revendication 7 ou 8, dans lequel une entrée de correspondance dans ladite table de correspondances est retirée après une temporisation, ladite temporisation étant de préférence au moins aussi longue que la durée de vie maximum d'une session.

10. Appareil selon l'une des revendications 7 à 9, dans lequel le nom d'hôte du serveur d'administration réel est substitué par des noms aléatoires respectivement différents lorsque les données échangées appartiennent à des sessions différentes.

11. Appareil selon l'une des revendications 7 à 10, dans lequel :
ladite unité d'envoi, si l'adresse du serveur d'administration dudit second domaine auquel les données doivent être envoyées n'est pas connue, comprend dans ledit message des informations concernant l'adresse d'un terminal dont ledit serveur d'administration est responsable de sorte que lorsque ledit message atteint ledit second domaine administratif, l'adresse dudit serveur d'administration qui n'a pas été connue peut être déterminée d'après ladite adresse dudit terminal.

12. Appareil selon la revendication 11, comprenant en outre :
une unité de maintien pour maintenir des informations de groupe d'adresses IP dans un domaine qui indique quel serveur d'administration est responsable de quelle adresse IP ;
une unité de détermination pour déterminer l'adresse dudit serveur d'administration qui n'a pas été connue d'après lesdites informations de groupe d'adresses IP.

13. Programme informatique comprenant un code programme exécutable par ordinateur qui lorsqu'il est exécuté par un ordinateur amène ledit ordinateur à réaliser toutes les étapes d'un procédé selon l'une des revendications 1 à 6.
